Europäisches Patentamt

European Patent Office

Office européen des brevets

(19)

(11) **EP 0 724 712 B1**

(12) **EUROPÄISCHE PATENTSCHRIFT**

(45) Veröffentlichungstag und Bekanntmachung des Hinweises auf die Patenterteilung:
**28.07.1999 Patentblatt 1999/30**

(51) Int Cl.6: **G01D 5/245**, G01P 13/04

(21) Anmeldenummer: 95912128.6

(86) Internationale Anmeldenummer:
**PCT/DE95/00308**

(22) Anmeldetag: **06.03.1995**

(87) Internationale Veröffentlichungsnummer:
**WO 95/24613 (14.09.1995 Gazette 1995/39)**

(54) **DREHWINKELSENSOR**

ANGLE OF ROTATION SENSOR

CAPTEUR D'ANGLE DE ROTATION

(84) Benannte Vertragsstaaten:
**DE ES FR GB IT**

(30) Priorität: **07.03.1994 DE 4407474**

(43) Veröffentlichungstag der Anmeldung:
**07.08.1996 Patentblatt 1996/32**

(73) Patentinhaber: **ASM AUTOMATION, SENSORIK, MESSTECHNIK GMBH**
**D-82008 Unterhaching (DE)**

(72) Erfinder:
• **STEINICH, Klaus-Manfred**
**D-85598 Pöring (DE)**
• **WIRTH, Peter**
**D-81451 München (DE)**

(74) Vertreter: **Alber, Norbert, Dipl.-Ing. et al**
**Patent- und Rechtsanwälte**
**Hansmann, Vogeser, Dr. Boecker,**
**Alber, Dr. Strych, Liedl**
**Albert-Rosshaupter-Strasse 65**
**81369 München (DE)**

(56) Entgegenhaltungen:
**EP-A- 0 342 375          EP-A- 0 449 037**
**DE-A- 3 340 129**

• **IBM TECHNICAL DISCLOSURE BULLETIN, Bd. 14, Nr. 4, September 1971 NEW YORK, US, Seite 1285 ANONYMOUS 'Ferroelectric Bubbles for Memory Applications. September 1971.'**

**Beschreibung**

Die Erfindung betrifft einen Drehwinkelsensor der im Oberbegriff des Anspruchs 1 beschriebenen Art.

Aus der DE 41 37 092 A1 ist ein Drehwinkelsensor mit einem Winkelcodierer bekannt, bei dem es sich um eine abgetastete Codescheibe handeln kann und der die Winkelstellung einer Welle über eine Umdrehung erfaßt. Ein der Codescheibe nachgeordnetes Potentiometer erfaßt die absolute Winkelstellung der Welle über mehrere Umdrehungen. Eine nachgeordnete Auswerteschaltung ordnet der Winkelstellung der Codescheibe eine zugehörige Umdrehungszahl unter Berücksichtigung von Getriebespiel und Meßwertfehlern des Potentiometers zu. Drehwinkelsensoren dieser Bauweise liefern unabhängig von zwischenzeitlichen Unterbrechungen der Versorgungsspannung immer den absoluten Drehwinkel über mehrere Umdrehungen. Nachteilig ist der hohe Herstellungsaufwand für Getriebestufen und Sensorelemente sowie eine begrenzte Lebensdauer aufgrund vieler mechanisch bewegter Teile. Die Anzahl der erfaßbaren Umdrehungen ist aufgrund der mechanischen Ausführung begrenzt.

Aus der DE 37 29 949 A1 ist ein Drehwinkelsensor mit einer Zählanordnung Z, mehreren, versetzt auf einem Kreisumfang feststehend angeordneten Impulsdraht-Bewegungssensoren S1 bis S6 und mehreren Magneten M bekannt. Die Ausgangsimpulse der Impulsdraht-Bewegungssensoren werden der Zählanordnung so zugeführt, daß der Zählstand der Zählanordnung ein Maß für die Drehlage eines mit einer Welle verbundenen Geberrades ist. Der Nachteil dieser Anordnung besteht darin, daß die Zählanordnung bei Ausbleiben der Versorgungsspannung ihre Funktion verliert, so daß Bewegungen der Welle nicht mehr erfaßt werden und der aktuelle Zählstand verloren geht.

Ein Drehwinkelsensor der genannten Art ist durch das Produkt CE100 der Firma T+R, Trossingen bekannt. Ein Fein-Sensorelement erfaßt die Winkelstellung einer Welle über eine Umdrehung, und die Meßwerte wiederholen sich periodisch mit jeder Umdrehung. Über Getriebe sind ein oder mehrere Grob-Sensorelemente hinter das Fein-Sensorelement gekoppelt. Der absolute Meßwert ergibt sich aus der geeigneten Kombination der Meßwerte des Fein-Sensorelements und der Grob-Sensorelemente. Drehwinkelsensoren dieser Bauweise liefern unabhängig von zwischenzeitlichen Unterbrechungen der Versorgungsspannung immer den absoluten Drehwinkel über eine große Anzahl von Umdrehungen. Nachteilig ist der hohe Herstellungsaufwand für Getriebestufen und Sensorelemente sowie eine begrenzte Lebensdauer aufgrund vieler mechanisch bewegter Teile. Die Anzahl der erfaßbaren Umdrehungen ist aufgrund der mechanischen Ausführung begrenzt.

Ein weiterer Drehwinkelsensor der genannten Art ist durch das Produkt OAM-74-11/24bit-LPS-5V (TS5778N10) der Firma Tamagawa Seiki Co., Tokio bekannt. Eine Meßanordnung erfaßt die Winkelbewegungen einer Welle. Mit einem Zhäler werden inkrementale Wellenwegungen unter Berücksichtigung der Bewegungsrichtung über mehrere Umdrehungen zu einem absoluten Meßwert aufaddiert. Bei Versorgungsspannungsausfall wird der Betrieb des Drehwinkelsensors durch eine Pufferbatterie sichergestellt. Auch langdauernde Unterbrechungen der Versorgungsspannung bei Stillstandszeiten müssen durch die Pufferbatterie überbrückt werden. Der Aufwand für die Realisierung ist bei dieser Ausführungsform geringer als bei Sensoren mit getriebegekoppelten Winkel sensorelementen. Der Nachteil dieses Winkelsensors ist die begrenzte Lebensdauer der Pufferbatterien. Diese müssen in bestimmten Zeitabständen ersetzt werden. Ein weiterer Nachteil ist die Notwendigkeit, die Sensorelemente aus der Pufferbatterie zu speisen und die damit verbundene zusätzliche Batteriebelastung. Unter extremen Umweltbedingungen wie hohen oder niedrigen Temperaturen sind Batterien nicht einsetzbar.

Aus der EP-A-0 342 375 ist ein Drehwinkelsensor gemäß dem Oberbegriff des Patentanspruchs 1 bekannt. Dieser Drehwinkelsensor enthält einen mit einer Drehwelle verbundenen Fein-Drehwinkelsensor, der den Winkel innerhalb einer Umdrehung mißt. Eine Zählschaltung verarbeitet die Signale einer Zählanordnung, die aus drei versetzt auf einem Kreisumfang feststehend angeordneten Impulsdrahtsensoren, einem Dauermagneten und der elektronischen Zählschaltung besteht. Die Zählschaltung ist jedoch nicht ausfallsicher gebildet, da eine externe Energieversorgung dauerhaft notwendig ist.

Das Dokument EP-A-0 449 037 beschreibt ebenfalls einen Drehwinkelsensor mit einem nicht-flüchtigen Speicher, der auch bei Stromunterbrechung die eingeschriebenen Daten behält. Zur Versorgung der einzelnen Schaltkreise dieses Drehwinkelsensors ist jedoch auch hier eine externe Energiequelle erforderlich. Bei einem Ausfall der Versorgungsspannung ist die Funktion des Drehwinkelsensors daher nicht gewährleistet.

Demgegenüber liegt der Erfindung die Aufgabe zugrunde, einen Drehwinkelsensor der eingangs genannten Art so weiterzubilden, daß bei einem Ausbleiben der von außen zugeführten Versorgungsspannung die Wellenumdrehungen ohne mechanisches Getriebe und ohne Versorgung aus Batterien gezählt werden.

Zur Lösung dieser Aufgabe sieht die Erfindung einen Drehwinkelsensor mit den im Anspruch 1 niedergelegten Merkmalen vor. Bei diesem Drehwinkelsensor ist ein nichtflüchtiger Schreib-/Lesespeicher zum Speichern der Anzahl der Wellenumdrehungen vorhanden und ein Teil der von den Impulsdraht-Bewegungssensoren gelieferten elektrischen Energie wird der elektronischen Zählschaltung zwecks Energieversorgung zugeführt. Dadurch wird vorteilhaft ohne Zufuhr einer von außen anliegenden oder in Batterien gespeicherten Spannung die Anzahl der Wellenumdrehungen erfaßt. Weitere vorteilhafte Weiterbildungen eines erfindungsgemäßen Drehwinkelsensors sind in den abhängigen Ansprüchen niedergelegt.

Die Erfindung wird im folgenden anhand von Ausführungsbeispielen unter Bezugnahme auf die Zeichnung erläutert.
In dieser zeigen

Fig. 1 ein Blockbild des vorteilhaften Drehwinkelsensors,
Fig. 2 eine schematisierte mechanische Anordnung von drei Bewegungssensoren und drei Dauermagneten,
Fig. 3 eine schematisierte mechanische Anordnung von zwei Bewegungssensoren und einem Dauermagneten,
Fig. 4 eine schematisierte mechanische Anordnung von zwei Bewegungssensoren, vier Dauermagneten und einem Impulsdraht,
Fig. 5 eine zur Achse der Drehwelle radiale Anordnung von Bewegungssensoren mit Dauermagneten,
Fig. 6 eine zur Achse der Drehwelle radiale Anordnung eines Flußleitstücks,
Fig. 7 eine zur Achse der Drehwelle parallele Anordnung von Bewegungssensoren mit Dauermagneten,
Fig. 8 eine zur Achse der Drehwelle parallele Anordnung von zwei Flußleitstücken,
Fig. 9 eine elektronische Zählschaltung mit Impulsformungs-Schaltungen,
Fig. 10 ein Impulsdiagramm der von drei Bewegungssensoren ausgegebenen Spannungsimpulse.
Fig. 11 ein Zustandsdiagramm zur Erläuterung der Auswertung der von drei Bewegungssensoren ausgegebenen Spannungsimpulse.

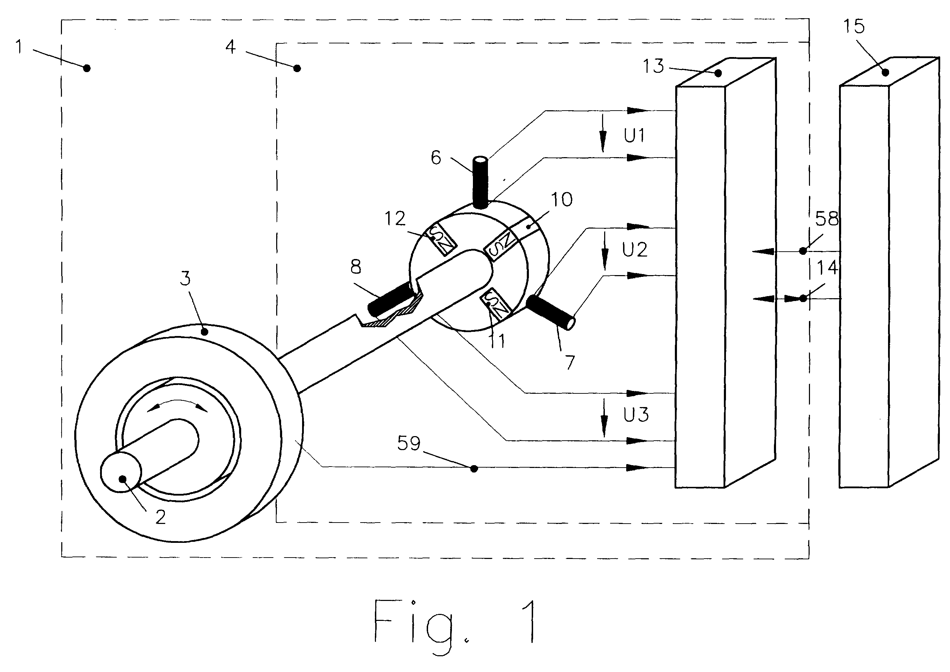

Der in Fig. 1 dargestellte Drehwinkelsensor 1 besteht aus einer Drehwelle 2, einem mit der Drehwelle verbundenen Fein-Drehwinkelsensor 3 zur Drehwinkelmessung über eine Umdrehung und einer Zählanordnung 4 zur Zählung der ganzen Umdrehungen der Drehwelle. Die Zählanordnung dieser Ausführungsform weist Impulsdraht-Bewegungssensoren 6, 7, 8, mit der Welle verbundene Dauermagneten 10, 11, 12 und eine elektronische Zählschaltung 13 auf. Der Zählschaltung wird der Meßwert des Fein-Drehwinkelsensors über Leitungen 59 und Spannungsimpulse 28, 29, 30 von den Bewegungssensoren zugeführt. Der Fein-Drehwinkelsensor ist in bekannter Weise, z. B. als optischer Enkoder oder Resolver, ausgeführt. Über eine Datenschnittstelle mit Leitungen 14 und Leitungen 58 zur Spannungsversorgung ist die Zählschaltung mit einer übergeordneten Einheit 15 verbunden.

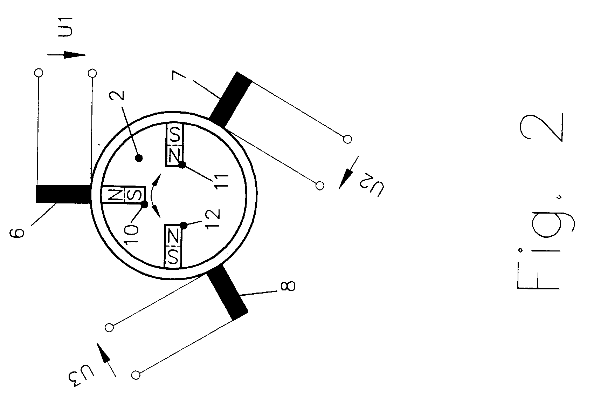

Fig. 2, Fig. 3 und Fig. 4 zeigen verschiedene grundsätzliche Ausführungsformen zur Anordnung von Impulsdraht-Bewegungssensoren, Dauermagneten und Flußleitstücken. Vorbestimmten Winkelstellungen der Drehwelle 2 sind die Spannungsimpulse der Bewegungssensoren zugeordnet. Unter Einbeziehen vergangener Drehzustände durch Berücksichtigung zeitlich zurückliegender Spannungsimpulse ermöglicht dies:

- das Erfassen jeder vollen Umdrehung der Drehwelle 2,
- das Berücksichtigen der Drehrichtung der Drehwelle,
- das Berücksichtigen der für Wiegandsensoren charakteristischen Positionsdifferenz zwischen Setz- und Rücksetzvorgang,
- die eindeutige Zuordnung der Spannungsimpulse der Bewegungssensoren zur Anzahl der Wellenumdrehungen durch Kombination eines durch die Spannungsimpulse definierten Umdrehungszustandes mit der Stellung des Fein-Drehwinkelsensors 3 auch bei mechanisch oder magnetisch verursachten Toleranzen der Winkellage der Spannungsimpulse

Fig. 2 zeigt eine Ausführungsform mit drei feststehenden, auf einem Kreisumfang im Abstand von 120° Grad angeordneten, unipolar wirkenden Impulsdraht-Bewegungssensoren 6, 7, 8, einen mit der Drehwelle 2 verbundenen Schalt-Dauermagnet 10 und zwei mit der Drehwelle verbundene Rücksetz-Dauermagneten 11, 12 entsprechend abhängigem Anspruch 7. Die Impulsdraht-Bewegungssensoren, auch Wiegand-Sensoren genannt, sind bei dieser Ausführungsform in bekannter Weise als mit Sensorspulen bewickelte Impulsdrahtabschnitte ausgeführt. Durch Drehung der Welle werden Schalt- und Rücksetzmagnete an den Bewegungssensoren so vorbeigeführt, daß das Magnetfeld der Schalt- und Rücksetzmagnete den Impulsdraht der Bewegungssensoren mit jeweils umgekehrter Polarität durchsetzt. Das Vorbeiführen des Schalt-Dauermagnet 10 vor einem der Bewegungssensoren erzeugt in bekannter Weise durch das gleichzeitige Ummagnetisieren aller magnetischen Domänen (Weiß'schen Bezirke) des Impulsdrahtes kurzzeitige Spannungsimpulse von definierter Länge und Amplitude in der Sensorspule. Das Vorbeiführen eines der Rücksetz-Dauermagnete 11, 12 setzt den Magnetisierungszustand des Bewegungssensors wieder zurück. Unipolar wirkende Impulsdraht-Bewegungssensoren liefern in bekannter Weise nur beim Schaltvorgang, nicht aber beim Rücksetzvorgang einen Spannungsimpuls. Bipolar wirkende Impulsdraht-Bewegungssensoren liefern sowohl beim Schaltvorgang als auch beim Rücksetzvorgang einen Spannungsimpuls. Impulslänge und -amplitude sind unabhängig von der Bewegungsgeschwindigkeit der Schalt- und Rücksetzmagnete. Schaltmagnet und Rücksetzmagnete sind auf dem Rotor so angeordnet, daß nach Vorbeiführen des Schaltmagneten immer ein Rücksetzmagnet an einem Bewegungssensor vorbeigeführt wird, bevor der Schaltmagnet an einem der beiden anderen Bewegungssensoren vorbeigeführt wird. Der Vorteil der Anordnung nach Fig. 2 ist die von unipolar wirkenden Impulsdraht-Bewegungssensoren erzeugte hohe Spannungsamplitude.

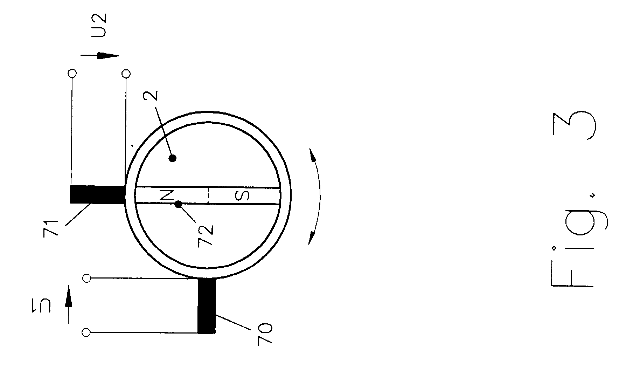

Fig. 3 zeigt eine Ausführungsform mit zwei feststehenden, auf einem Kreisumfang im Abstand von 90° Grad angeordneten, bipolar wirkenden Impulsdraht-Bewegungssensoren 70, 71 und einen mit der Drehwelle 2 verbundenen Dauermagnet 72 entsprechend abhängigem Anspruch 8. Im Gegensatz zu unipolar wirkenden liefern bipolar wirkende Impulsdraht-Bewegungssensoren sowohl beim Schalt- als auch beim Rücksetzvorgang einen Spannungsimpuls. Der Vorteil dieser Anordnung ist die Realisierung mit der geringstmöglichen Anzahl von Bewegungssensoren.

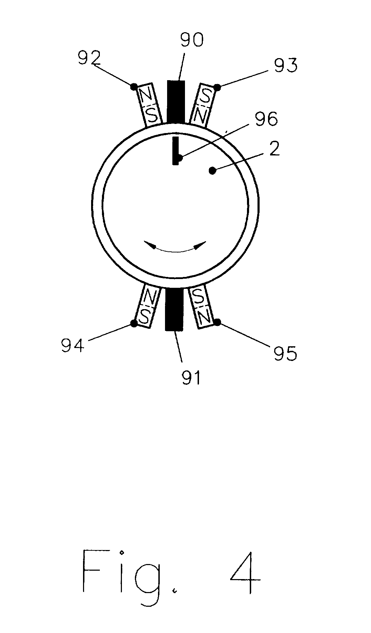

Fig. 4 zeigt eine Ausführungsform mit zwei feststehenden, auf einem Kreisumfang im Abstand von 180° Grad angeordneten, bipolar wirkenden Impulsdraht-Bewegungssensoren bestehend aus zwei Sensorspulen 90, 91, zwei der Sensorspule 90 zugeordneten Dauermagneten 92, 93, zwei der Sensorspule 91 zugeordneten Dauermagneten 94, 95 und einen mit der Drehwelle 2 verbundenen Impulsdraht 96 entsprechend abhängigem Anspruch 11. Im Gegensatz zu den vorangegangenen Beispielen nach Fig. 2 und Fig. 3 ist die Sensorspule des Impulsdraht-Bewegungssensors in bekannter Weise getrennt vom Impulsdraht zwischen zwei gegensinnig gepolten Dauermagneten angeordnet. Das Vorbeiführen des Impulsdrahtes an den Magneten und der Sensorspule durch Drehung der Welle löst zwei Ummagnetisierungsvorgänge des Impulsdrahtes aus, von denen, auf Grund der geometrischen Anordnung, nur einer das die Sensorspule durchsetzende Magnetfeld so beeinflußt, daß ein Spannungsimpuls induziert wird. Diese Anordnung liefert Spannungsimpulse, deren Polarität die Drehrichtung anzeigen.

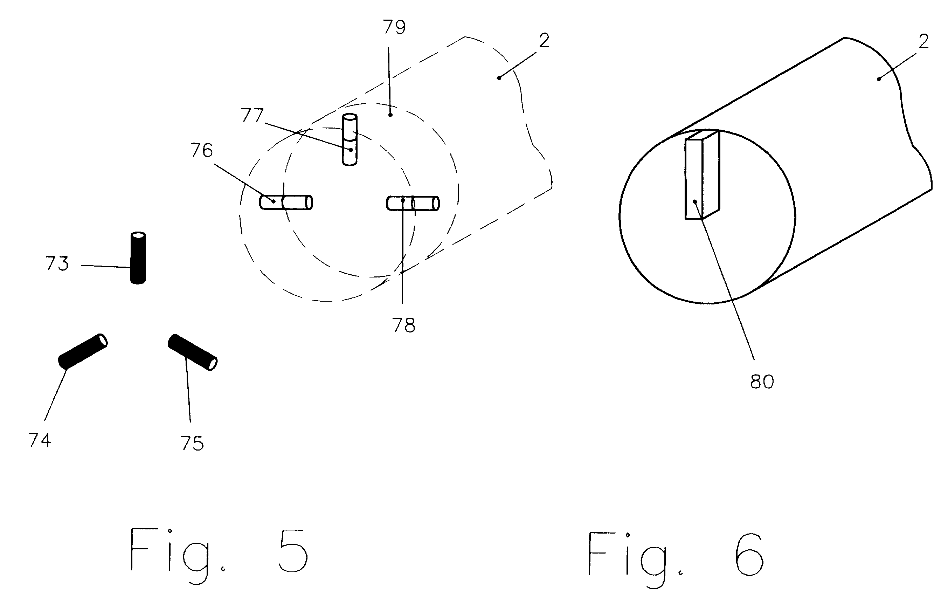

Fig. 5 zeigt eine mechanische Anordnung von drei Bewegungssensoren 73, 74, 75, einem Schalt-Dauermagnet 77 und zwei Rücksetz-Dauermagneten 76, 78 nach abhängigem Anspruch 7. Die magnetisch wirksamen Achsen von Bewegungssensoren und Dauermagneten sind radial zur Achse der Drehwelle 2 orientiert. Die am Drehwellenende angebrachten Dauermagnete sind in ein Wellenstück 79 aus magnetisch nichtleitendem Material eingebettet, damit der Aufbau der magnetischen Felder unbeeinflußt vom Material der Drehwelle bleibt. Eine Anordnung in dieser Form erlaubt den Aufbau eines erfindungsgemäßen Drehwinkelsensors mit kleinem Außenumfang.

Fig. 6 zeigt eine mechanische Ausführung nach abhängigem Anspruch 10. Je ein bipolar wirkender Impulsdraht-Bewegungssensor und zwei Dauermagnete bilden in bekannter Weise eine Einheit von denen drei entsprechend den Bewegungssensoren 73, 74, 75 in Fig. 5 feststehend angeordnet sind. Die Magnetisierung der Bewegunssensoren wird durch ein bewegliches, an der Welle angebrachtes Flußleitstück 80 gesteuert. Der magnetische Fluß beider Dauermagnete durchsetzt jeweils gegensinnig über Luftspalte den Bewegungssensor (Impulsdraht und die darauf gewickelte Sensorspule). Bei Überbrücken eines der Luftspalte durch Heranführen des beweglich angeordneten Flußleitstückes 80 wird der magnetische Fluß eines der Magnete verstärkt und der Bewegungssensor ummagnetisiert. Entsprechend wird der Bewegungssensor in anderer Richtung ummagnetisiert wenn das Flußleitstück an den anderen Luftspalt herangeführt wird. Der Vorteil dieser Ausführungsform liegt in der besonders einfachen Gestaltung der beweglich auszuführenden Teile der Anordnung.

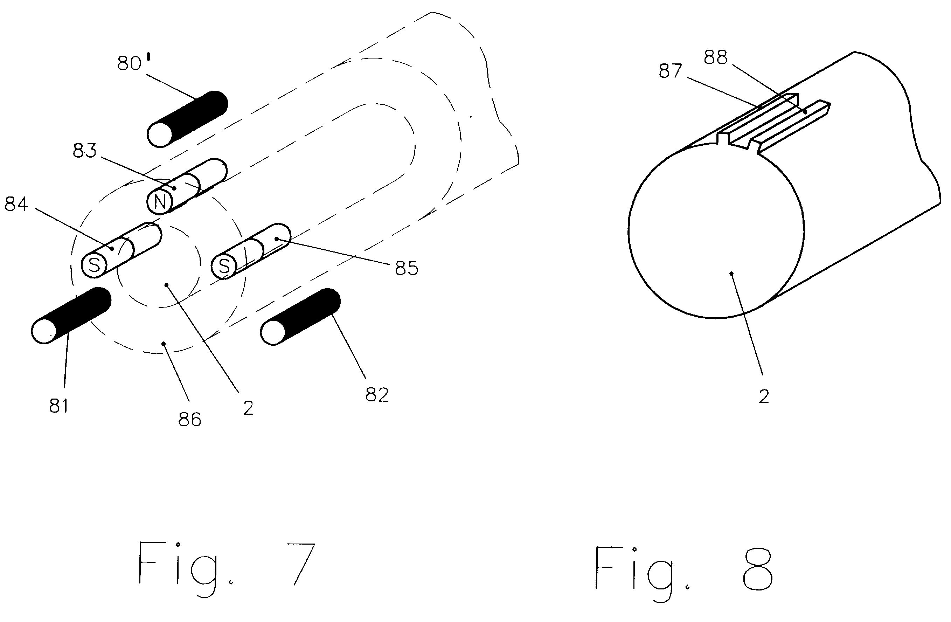

Fig. 7 zeigt eine weitere mechanische Anordnung von drei Bewegungssensoren 80', 81, 82, einem Schalt-Dauermagnet 83 und zwei Rücksetz-Dauermagneten 84, 85 nach abhängigem Anspruch 7. Die magnetisch wirksamen Achsen von Bewegungssensoren und Dauermagneten sind achsparallel zur Drehwelle 2 orientiert. Die am Drehwellenende angebrachten Dauermagnete sind in ein Wellenstück 86 aus magnetisch nichtleitendem Material eingebettet, damit der Aufbau der magnetischen Felder unbeeinflußt vom Material der Drehwelle bleibt. Eine Anordnung in dieser Form erlaubt den Aufbau eines erfindungsgemäßen Drehwinkelsensors in besonders kurzer Bauweise.

Fig. 8 zeigt eine mechanische Ausführung nach abhängigem Anspruch 9. Je ein unipolar (vgl. Fig. 6) wirkender Impulsdraht-Bewegungssensor und zwei Dauermagnete bilden in bekannter Weise eine Einheit von denen drei entsprechend den Bewegungssensoren 80', 81, 82 in Fig. 7 feststehend angeordnet sind. Die Magnetisierung der Bewegunssensoren wird durch zwei bewegliche, an der Welle 2 angebrachten Flußleitstücke 87, 88 wie in Fig. 6 beschrieben gesteuert. Der Vorteil dieser Ausführungsform liegt neben der besonders einfachen Gestaltung der beweglich auszuführenden Teile der Anordnung in der kurzen Bauform.

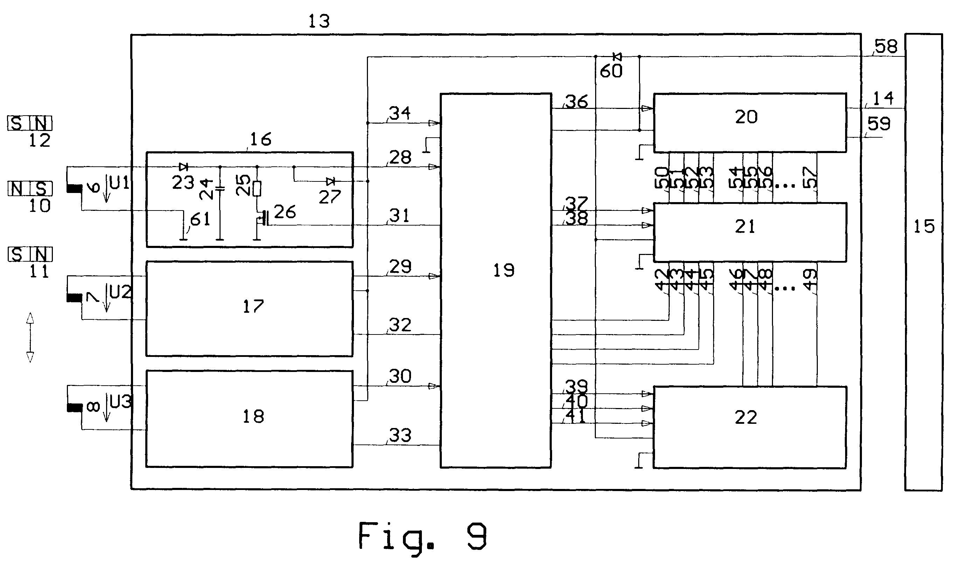

Fig. 9 zeigt die Ausführung einer elektronischen Zählschaltung 13 nach den abhängigen Ansprüchen 2, 3, 4, 5, 12, bestehend aus drei gleich ausgeführten Impulsformungs-Schaltungen 16, 17, 18, einer Steuerschaltung 19, einem setzbaren Auf-/Abzähler 22, einem nichtflüchtigen Schreib-/Lesespeicher 21 und einer Auswerte- und Schnittstellen-Schaltung 20. Jede der Impulsformungs-Schaltungen besteht aus einer Diode 23, einem Ladekondensator 24, einem Entladewiderstand 25, einem elektronischen Schalter 26 und einer Diode 27. Die von den spannunggenerierenden Bewegungssensoren 6, 7, 8 erzeugten Impulsspannungen U1, U2, U3 werden den drei Impulsformungs-Schaltungen 16, 17, 18 zugeführt. Über die Diode 23 in Durchlassrichtung lädt ein Spannungsimpuls den Ladekondensator 24. Die Spannung der Ladekondensatoren wird als Impulsspannungsvektor Y = [Y1, Y2, Y3] bestehend aus den analogen Signalen Y1, Y2, Y3, 28, 29, 30 der Steuerschaltung 19 zugeführt. Die Kondensatorspannung ist der Reihenschaltung aus elektronischem Schalter 26 und Entladewiderstand 25 zugeführt. Logiksignale "Ladekondensator entladen" 31, 32, 33 zum Entladen der Ladekondensatoren sind den elektronischen Schaltern von der Steuerschaltung 19 zugeführt. Über die Diode 27 wird in Durchlaßrichtung aus der Kondensatorspannung eine Hilfsversorgungsspannung auf einer Leitung 34 gebildet. Die Hilfsersorgungsspannung ist den Versorgungsspannungseingängen der Steuerschaltung 19, des Auf/Abwärtszählers 22 und des nichtflüchtigen Speichers 21 zugeführt. Über die Diode 60 in Durchlaßrichtung ist die von außen über die Leitung 58 zugeführte Versorgungsspannung mit der Hilfsversorgungsspannung verbunden. Somit werden im normalen Betriebsfall bei anstehender Versorgungsspannung Steuerschaltung, Auf/Abwärtszähler und nichtflüchtiger Speicher zur Zählung der Wellenumdrehungen aus der von außen zugeführten Versorgungsspannung versorgt. Bei Ausbleiben der von außen zugeführten Versorgungsspannung werden der Fein-Drehwinkelsensor und die Auswerte- und Schnittstellenschaltung nicht mehr mit Spannung versorgt, die Zählung der Wellenumdrehungen wird durch die aus der Impulsformungs-Schaltung abgeleiteten Hilfsversorgungsspannung fortgeführt. Die Steuerschaltung 19 gibt ein Logiksignal "Ausgabe bereit" 36 zur Steuerung der Übergabe von Umdrehungswerten an die Auswerte- und Schnittstellen-Schaltung 20 und die Logiksignale "In nichtflüchtigen Speicher schreiben" 37 und "Aus nichtflüchtigem Speicher lesen" 38 zur Steuerung des nichtflüchtigen Speicher 21 aus. Weiterhin ist die Steuerschaltung über ein Logiksignal "Zählrichtung" 42 sowie einen Zustandsvektor "Letzter Umdrehungszustand" Z = [Z1, Z2, Z3] bestehend aus den Logiksignalen Z1, Z2, Z3 43, 44, 45 mit dem nichtflüchtigen Speicher verbunden. Weiterhin gibt die Steuerschaltung Logiksignale "Takt" 39, "Auf/Ab" 40 und "Zähler setzen" 41 an den Auf/Abwärtszähler aus. Für das Laden und Zurückschreiben der Umdrehungszahl ist der Auf/Abwärtszähler mit dem nichtflüchtigen Speicher über ein Datenwort "Umdrehungen", bestehend aus den Datenbit D0, D1, ... Dn 46, 47, 48, .. 49, verbunden. Der nichtflüchtige Speicher ist mit der Auswerte- und Schnittstellen-Schaltung 20 über die Logiksignale "Zählrichtung-Ausgabe" 50 sowie einen Zustandsvektor "Letzter Umdrehungszustand-Ausgabe" Z' = [Z1', Z2', Z3'] bestehend aus den Logiksignalen Z1', Z2', Z3' 51, 52, 53 und über ein Datenwort "Umdrehungen-Ausgabe", bestehend aus den Datenbit D0', D1', ... Dn' 54, 55, 56, .. 57, mit der Auswerte- und Schnittstellen-Schaltung verbunden. Der nichtflüchtige Speicher ist in ferroelektrischer Technologie ausgeführt. Er besteht aus einem Datenwort, aufgeteilt auf beispielsweise zwölf Bit als Speicher für die Umdrehungszahl, drei Bit als Speicher für den Zustandsvektor "Letzter Umdrehungszustand" Z und ein Bit für die "Zählrichtung" 42. Speicherbausteine in ferroelektrischer Speichertechnologie zeichnen sich durch besonders geringen Stromverbrauch und durch schnellen Lese- und Schreibzugriff aus. Das Speicherelement der ferroelektrischen Speichertechnologie ist ein elektrischer Kristall-Dipol. Ähnlich einem ferromagnetischem Dipol ändert dieser seine Ausrichtung durch Anlegen eines elektrischen Feldes und hält diese ohne Versorgungsspannung. In einer anderen Ausführungsform nach abhängigem Anspruch 6 wird der nichtflüchtige Schreib-/Lesespeicher 21 als statischer Halbleiterspeicher in CMOS Technologie mit einer Pufferbatterie oder einem Pufferkondensator ausgeführt. Da die Bewegungssensoren keine Versorgungsspannung benötigen, weist diese Ausführungsform einen vorteilhaft niedrigen Versorgungsstrom für den Betrieb des nichtflüchtigen Speichers auf, so daß die Pufferbatterien über eine längere Lebensdauer verwendbar bleiben.

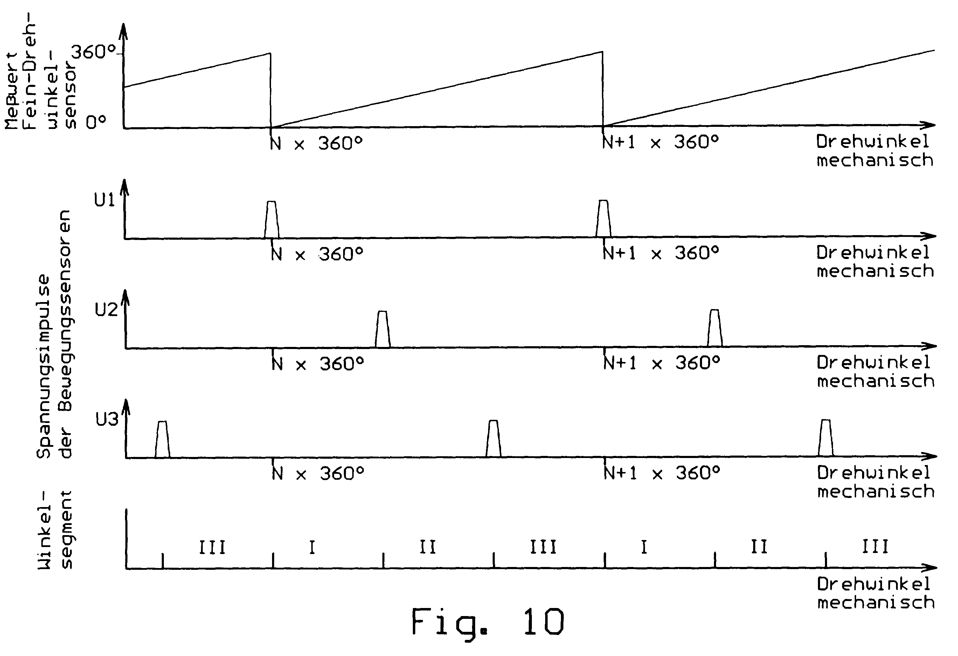

Fig. 10 zeigt beispielhaft die von den drei Impulsdrahtsensoren 6, 7, 8 erzeugten Spannungsimpulse und deren Zuordnung zum absoluten Drehwinkel der Drehwelle 2:

$$WA = WF + N \times 360°.$$

wobei

N: Anzahl der Wellenumdrehungen
WA: Absoluter Drehwinkel
WF: Drehwinkel über eine Umdrehung

Durch die Spannungsimpulse U1, U2, U3 wird eine Umdrehung der Welle in drei Sektoren I, II, III eingeteilt. Das Auftreten eines Spannungsimpulses U1 zeigt bei Linksdrehung den Übergang des Wellendrehwinkels von Sektor III nach Sektor I an, bei Rechtsdrehung den Übergang von Sektor I nach Sektor III. Entsprechendes gilt für die Spannungsimpulse U2, U3. Die Winkelstellung der Drehwelle kann somit durch Auswertung der durch die Spannungsimpulse U1, U2, U3 gegebenen Zustände bei Berücksichtigung von vergangenen Zuständen U1(-1), U2(-1), U3(-1) einem der Sektoren I, II oder III zugeordnet werden. Die Anzahl der Wellenumdrehungen kann bei entsprechender, nachfolgend dargestellten, Auswertung der Spannungsimpulse gezählt werden.

Nachfolgend wird für eine Anordnung nach abhängigem Anspruch 7 das Zusammenwirkungen der Bewegungssensoren 6, 7, 8, der elektronischen Zählschaltung 13, der Impulsformungs-Schaltungen 16, 17, 18, der Steuerschaltung 19, dem setzbaren Auf-/Abzähler 22, dem nichtflüchtigen Schreib-/Lesespeicher 21 und der Auswerte- und Schnittstellen-Schaltung 20 anhand von logischen Beziehungen und Steuersequenzen beschrieben.

Der "Impulsspannungsvektor" Y = [Y1, Y2, Y3] nimmt die Werte Y = [100], Y = [010], und Y = [001] mit folgender Bedeutung an:

Y = [100]: aktuelle Schaltmagnetstellung in Winkelsegment I oder III
Y = [010]: aktuelle Schaltmagnetstellung in Winkelsegment I oder II
Y = [001]: aktuelle Schaltmagnetstellung in Winkelsegment II oder III

Der Zustandsvektor "Letzter Umdrehungszustand" Z = [Z1, Z2, Z3] nimmt die Werte Z = [100], Z = [010] und Z = [001] mit folgender Bedeutung an:

Z = [100]: letzte Schaltmagnetstellung in Winkelsegment I oder III
Z = [010]: letzte Schaltmagnetstellung in Winkelsegment I oder II
Z = [001]: letzte Schaltmagnetstellung in Winkelsegment II oder III

Das Logiksignal "Zählrichtung" RB hat folgende Bedeutung

RB = 0: Rechtsdrehung, Zählrichtung abwärts
RB = 1: Linksdrehung, Zählrichtung aufwärts

Der Zustandsvektor "Letzter Umdrehungszustand" Z und das Logiksignal "Zählrichtung" werden im nichtflüchtigen Speicher abgelegt.

Nach Aufbau der Hilfsversorgungspannung UV' als Folge eines Spannungsimpulses von einem der Bewegungssensoren arbeitet die Steuerschaltung folgende Steuersequenz ab:

Schritt 1: Warten auf Spannungsimpuls, dann fortfahren mit Schritt 2
Schritt 2: Auf-/Abzähler 22 aus nichtflüchtigem Speicher laden, Impulsspannungsvektor Y = [Y1, Y2, Y3] einlesen, Zustandsvektor "Letzter Umdrehungszustand" Z = [Z1, Z2, Z3] aus nichtlüchtigem Speicher laden
Schritt 3: Auf-/Abzähler unter Auswertung von Zählrichtung, Impulsspannungsvektor Y und Zustandsvektor "Letzter Umdrehungszustand" Z über die Logiksignale "Takt", "Auf/Ab", "Zähler Setzen" inkrementieren, dekrementieren oder nicht ändern
Schritt 4: Neue Zählrichtung ermitteln, Zählrichtungsbit entsprechend setzen
Schritt 5: Inhalt des Auf-/Ab-Zählers 22 in nichtflüchtigen Speicher 21 schreiben, Impulsspannungsvektor Y als Zustandsvektor "Letzter Umdrehungszustand" Z und Richtungsbit RB in den nichtflüchtigen Speicher schreiben.
Schritt 6: Falls externe Versorgungsspannung anliegend: Inhalt des nichtflüchtigen Speichers 21 mit Hilfe des Logiksignals "Ausgabe bereit" 36 an die Auswerte- und Schnittstellen-Schaltung 20 ausgeben.
Schritt 7: Ladekondensator durch Ansteuem des elektronischen Schalters entladen. Mit Schritt 1 fortfahren

Die Steuersequenz bewirkt, daß der Auf-/Abwärtszähler mit dem Inhalt des nichtflüchtigen Speichers geladen, abhängig vom Impulsspannungsvektor Y, Zustandsvektor "Letzter Umdrehungszustand" Z und Zählrichtungsbit RB inkrementiert bzw. dekrementiert und wieder in den nichtflüchtigen Speicher zurückübertragen wird.

Das Zählrichtungsbit RB wird entsprechend der logischen Auswertung in den Gleichungen (G1) bis (G9) gesetzt:

$$\text{Falls } Z = [100] \text{ UND } Y = [001] \text{ dann } RB = 0 \text{ (abwärts)} \tag{G1}$$

$$\text{Falls } Z = [100] \text{ UND } Y = [010] \text{ dann } RB = 1 \text{ (aufwärts)} \tag{G2}$$

$$\text{Falls } Z = [100] \text{ UND } Y = [100] \text{ dann keine Änderung von RB} \tag{G3}$$

$$\text{Falls } Z = [010] \text{ UND } Y = [100] \text{ dann } RB = 0 \text{ (abwärts)} \tag{G4}$$

$$\text{Falls } Z = [010] \text{ UND } Y = [001] \text{ dann } RB = 1 \text{ (aufwärts)} \tag{G5}$$

$$\text{Falls } Z = [010] \text{ UND } Y = [010] \text{ dann keine Änderung von RB} \tag{G6}$$

$$\text{Falls } Z = [001] \text{ UND } Y = [010] \text{ dann } RB = 0 \text{ (abwärts)} \tag{G7}$$

$$\text{Falls } Z = [001] \text{ UND } Y = [100] \text{ dann } RB = 1 \text{ (aufwärts)} \qquad (G8)$$

$$\text{Falls } Z = [001] \text{ UND } Y = [001] \text{ dann keine Änderung von } RB \qquad (G9)$$

Das Verändern des Auf-/Abwärtszählers wird abhängig vom Impulsspannungsvektor Y, Zustandsvektor "Letzter Umdrehungszustand" Z und Zählrichtungsbit RB nach folgenden logischen Beziehungen durchgeführt:

$$\text{Falls } Z = [001] \text{ UND } Y = [100] \text{ UND } RB = 1 \text{ dann } N = N+1 \qquad (G10)$$

$$\text{Falls } Z = [010] \text{ UND } Y = [100] \text{ UND } RB = 0 \text{ dann } N = N-1 \qquad (G11)$$

$$\text{Falls } Z = [100] \text{ UND } Y = [010] \text{ UND } RB = 0 \text{ dann } N = N+1 \qquad (G12)$$

$$\text{Fall } Z = [100] \text{ UND } Y = [001] \text{ UND } RB = 1 \text{ dann } N = N-1 \qquad (G13)$$

$$\text{Für alle anderen Zustände} \qquad N = N \qquad (G14)$$

Die Gleichungen (G10) und (G11) sagen aus, daß jeder Impuls U1 des Bewegungssensors 6 bei monotoner Drehbewegung der Drehwelle 2 in positiver bzw. negativer Drehrichtung den Auf-/Abwärtszähler um den Wert "1" inkrementiert bzw. dekrementiert. Die Gleichungen (G12) und (G13) sagen aus, daß nach Drehrichtungsumkehr gegebenenfalls die Impulse U2, U3 der Bewegungssensoren 7 und 8 zum inkrementieren bzw. dekrementieren des Umdrehungszählers ausgewertet werden.

Die Auswerte- und Schnittstellen-Schaltung 20 setzt den Meßwert des Fein-Drehwinkelsensors und den im nichtflüchtigen Speicher abgelegten Wert des Umdrehungszählers zu einem absoluten Meßwert für den Drehwinkel zusammen. Da die relative Lage der spannunggenerierenden Bewegungssensoren 6, 7, 8 bezüglich der Stellung des Fein-Drehwinkelsensors mit Fertigungs- und Bauelement-Toleranzen behaftet ist, muß zur Ermittlung der absoluten Winkelstellung WA der Drehwelle der Wert des Fein-Drehwinkelsensors 3, der im nichtflüchtigen Speicher 21 abgelegte Zählerstand, der Zustandsvektor "Letzter Umdrehungszustand" Z und das Zählrichtungsbit ausgewertet werden. Diese Auswertung berücksichtigt außerdem die in Verbindung mit einer Drehrichtungsumkehr auftretenden Übergangszustände nach Gleichung (G12) und (G13), sie synchronisiert die Information des Umdrehungszählers mit der Winkelstellung des Fein-Drehwinkelsensors. Das Ergebnis ist ein korrigierter Zählerstand N' als Funktion der Winkelstellung des Fein-Drehwinkelsensors, des Zustandsvektors "Letzter Umdrehungszustand" Z und der "Zählrichtung" RB. Die Auswertung erfolgt nach dem Algorithmus:

$$\text{Falls } RB = 1 \text{ UND } Z = [100] \text{ UND } WF < 180° \text{ dann } N' = N \qquad (G19)$$

$$\text{Falls } RB = 1 \text{ UND } Z = [100] \text{ UND } WF > 180° \text{ dann } N' = N-1 \qquad (G20)$$

$$\text{Falls } RB = 0 \text{ UND } Z = [100] \text{ UND } WF < 180° \text{ dann } N' = N+1 \qquad (G21)$$

$$\text{Falls } RB = 0 \text{ UND } Z = [100] \text{ UND } WF > 180° \text{ dann } N' = N \qquad (G22)$$

$$\text{Falls } RB = 1 \text{ UND } Z = [010] \text{ UND } WF < 300° \text{ dann } N' = N \qquad (G23)$$

$$\text{Falls } RB = 1 \text{ UND } Z = [010] \text{ UND } WF > 300° \text{ dann } N' = N-1 \qquad (G24)$$

$$\text{Falls RB} = 0 \text{ UND Z} = [010] \text{ UND WF} < 300° \text{ dann N'} = N \qquad (G25)$$

$$\text{Falls RB} = 0 \text{ UND Z} = [010] \text{ UND WF} > 300° \text{ dann N'} = N\text{-}1 \qquad (G26)$$

$$\text{Falls RB} = 1 \text{ UND Z} = [001] \text{ UND WF} < 60° \text{ dann N'} = N\text{+}1 \qquad (G27)$$

$$\text{Falls RB} = 1 \text{ UND Z} = [001] \text{ UND WF} > 60° \text{ dann N'} = N \qquad (G28)$$

$$\text{Falls RB} = 0 \text{ UND Z} = [001] \text{ UND WF} < 60° \text{ dann N'} = N\text{+}1 \qquad (G29)$$

$$\text{Falls RB} = 0 \text{ UND Z} = [001] \text{ UND WF} > 60° \text{ dann N'} = N \qquad (G30)$$

Dabei ist:

RB: Zählrichtung
WF: Winkelstellung gemessen mit Fein-Winkelsensorelement
N: Anzahl der Umdrehungen im nichtflüchtigen Speicher 21
N': Korrigierte Anzahl der Umdrehungen

Die absolute Winkelstellung WA der Drehwelle 2 über mehrere Umdrehungen wird gebildet durch die Kombination des Winkelmeßwerts WF des Fein-Drehwinkelsensors 3 mit dem korrigierten Zählerstand N'. Dies wird durch die Auswerte- und Schnittstellen-Schaltung 20 ausgeführt:

$$WA = WF + N' \text{ x } 360°.$$

mit

WA: absoluter Winkel der Drehwelle über mehrere Umdrehungen
WF: absoluter Winkel der Drehwelle über eine Umdrehungen
N': korrigierte Anzahl der Umdrehungen

Die absolute Winkelstellung wird von der Auswerte- und Schnittstellen-Schaltung 20 über die Datenschnittstelle mit Leitungen 14 der übergeordneten Einheit 15 zugeführt. Da für die praktische Anwendung der Umdrehungszähler meist auf einen vorbestimmten Wert gesetzt werden muß, ist die Übertragung eines Zahlenwerts von der übergeordneten Einheit 15 in den nichtflüchtigen Speicher des Drehwinkelsensors vorgesehen.

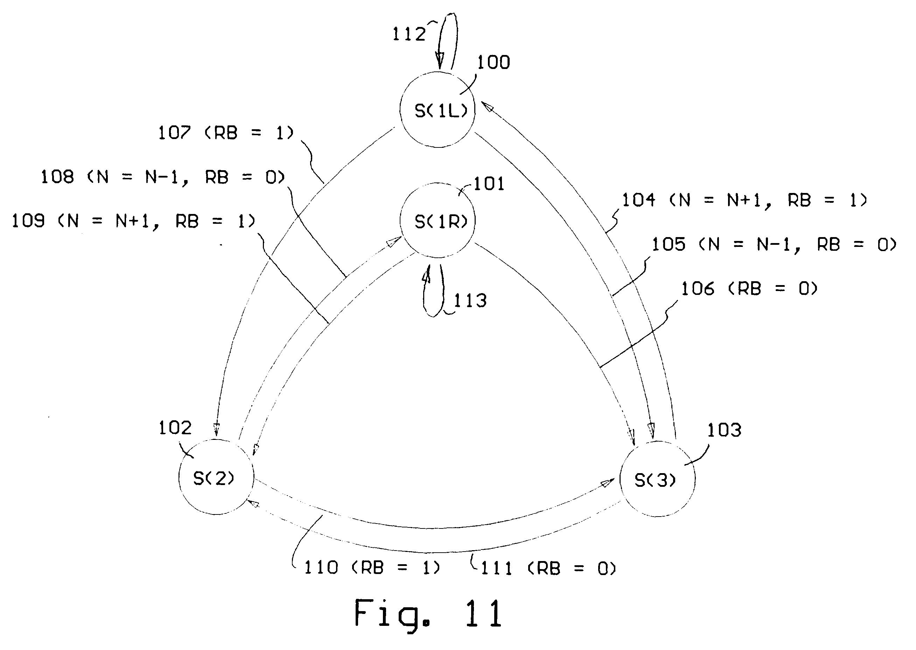

Fig. 11 zeigt eine alternative graphische Darstellungsform der in den Gleichungen G1 bis G14 beschriebenen logischen Beziehungen zur Zählung der Wellenumdrehungen in Form eines Zustandsdiagramms. Danach ist die Bewegung der Drehwelle mit Hilfe von vier logischen Zuständen S(1L) 100, S(1R) 101, S(2) 102, S(3) 103 und zehn Zustandsübergängen entsprechend der Wellenumdrehung in oder gegen den Uhrzeigersinn dargestellt.

Es bedeuten Zustand

S(1L):    aktuelle Schaltmagnetstellung in Winkelsegment 1 oder III letzte Zählrichtung "aufwärts"
S(1R):    aktuelle Schaltmagnetstellung in Winkelsegment 1 oder III letzte Zählrichtung "abwärts"
S(2):    aktuelle Schaltmagnetstellung in Winkelsegment I oder II
S(3):    aktuelle Schaltmagnetstellung in Winkelsegment II oder III

Folgende Übergänge zwischen den Zuständen sind möglich, die Veränderungen des Zählerstands N des Umdrehungszählers und/oder des Richtungsbit RB sind in der Tabelle dargestellt:

| S(1L) | => | S(2): | - | RB = 1, | Übergang 107 |
|-------|-----|-------|-----|---------|--------------|

(fortgesetzt)

| | | | | | |
|---|---|---|---|---|---|
| S(1R) | => | S(2): | N = N+1, | RB = 1, | Übergang 109 |
| S(1L) | => | S(3): | N = N-1, | RB = 0, | Übergang 105 |
| S(1R) | => | S(3): | - | RB = 0, | Übergang 106 |
| S(3) | => | S(1L): | N = N+1, | RB = 1, | Übergang 104 |
| S(2) | => | S(1R): | N = N-1, | RB = 0, | Übergang 108 |
| S(2) | => | S(3): | - | RB = 1, | Übergang 110 |
| S(3) | => | S(2): | - | RB = 0, | Übergang 111 |
| S(1R) | => | S(1R): | - | - | Übergang 112 |
| S(1L) | => | S(1L): | - | - | Übergang 113 |

Bei monotoner Linksdrehung der Welle erfolgen die Zustandsübergänge 104, 107, 110 mit Inkrementieren des Auf-/Abzählers bei Übergang 104. Bei monotoner Rechtsdrehung erfolgen die Zustandsübergänge 106, 108, 111 mit Dekrementieren des Auf-/Abzählers bei Übergang 108. Bei Drehrichtungswechsel innerhalb der Sektoren 1 und III erfolgen die Zustandsübergänge 112 und 113 ohne Beeinflussung von Zähler oder Richtungsbit. Bei Richtungswechsel von Linksdrehung nach Rechtsdrehung mit Verlassen der Sektoren I und III erfolgt der Zustandsübergang 105 mit Dekrementieren des Zählers. Bei Richtungswechsel von Rechtsdrehung nach Linksdrehung mit Verlassen der Sektoren I und III erfolgt der Zustandsübergang 109, mit Inkrementieren des Zählers. Das Richtungsbit wird logisch "1" gesetzt bei den Zustandsübergängen 107, 109, 110, 104, es wird logisch "0" gesetzt bei den Zustandsübergängen 105, 106, 108, 111. Die Auswertung des Richtungsbit erfolgt vor Ausführung des entsprechenden Zustandsübergangs, die Aktualisierung erfolgt danach.

**Patentansprüche**

1.  Drehwinkelsensor (1) zur Messung der Winkelstellung einer Drehwelle (2) über mehr als eine Umdrehung, bestehend aus einem mit der Drehwelle (2) verbundenen Feindrehwinkelsensor (3) zur absoluten Messung der Winkelstellung der Drehwelle (2) über eine Umdrehung, und aus einer Zählanordnung (4) zur Zählung der ganzen Umdrehungen der Drehwelle (2), wobei die Zählanordnung (4) aus mindestens zwei, versetzt auf einem Kreisumfang feststehend angeordneten Impulsdraht-Bewegungssensoren (70, 71), mindestens einem Dauermagneten (72) und einer elektronischen Zählschaltung (13) besteht,
    **dadurch gekennzeichnet, daß**
    ein nicht-flüchtiger Schreib-/Lesespeicher (21) zum Speichern der Anzahl der Wellenumdrehungen vorhanden ist und ein Teil der von den Impulsdraht-Bewegungssensoren (70, 71) gelieferten elektrischen Energie der elektronischen Zählschaltung (13) zwecks Energieversorgung zugeführt wird.

2.  Drehwinkelsensor nach Anspruch 1,
    **dadurch gekennzeichnet, daß**
    jedem Impulsdraht-Bewegungssensor eine Impulsformungs-Schaltung (16) zugeordnet ist, bestehend aus einem Ladeelement (24), dem über ein Schaltelement (23) die Spannungsimpulse des Bewegungssensors zugeführt werden, und einem weiteren Schaltelement (27), über das die Spannung des Ladeelements einer Hilfsversorgungsspannung (34) zugeführt wird.

3.  Drehwinkelsensor nach Anspruch 2,
    dadurch gekennzeichnet, daß
    die Schaltelemente (23, 27) als Halbleiterdioden und das Ladeelement (24) als Kondensator ausgeführt sind.

4.  Drehwinkelsensor nach Anspruch 2 oder 3,
    **dadurch gekennzeichnet, daß**
    die Impulsformungs-Schaltung (16) eine aus einem Entladewiderstand (25) und einem elektronischen Schalter (26) bestehende Reihenschaltung aufweist, der die Spannung des Ladeelements (24) zugeführt wird.

5.  Drehwinkelsensor nach einem der Ansprüche 1 bis 4,
    **dadurch gekennzeichnet, daß**
    die Speicherelemente des nicht-flüchtigen Schreib-/Lesespeichers (21) in ferroelektrischer Technologie als Kristalldipole ausgeführt sind, deren Schaltzustand durch Anlegen eines elektrischen Feldes verändert wird.

**6.** Drehwinkelsensor nach Anspruch 1,
**dadurch gekennzeichnet, daß**
der nicht-flüchtige Schreib-/Lesespeicher (21) als statischer Halbleiterspeicher ausgeführt ist, dem eine Versorgungsspannung aus einem Energiespeicher zugeführt wird.

**7.** Drehwinkelsensor nach einem der Ansprüche 1 bis 6,
**dadurch gekennzeichnet, daß**
drei unipolar wirkende Impulsdraht-Bewegungssensoren (6, 7, 8, 73, 74, 75, 80', 81, 82) ein mit der Drehwelle (2) verbundener Schalt-Dauermagnet (10, 77, 83) und zwei mit der Drehwelle verbundene Rücksetz-Dauermagnete (11, 12, 76, 78, 84, 85) vorgesehen sind.

**8.** Drehwinkelsensor nach einem der Ansprüche 1 bis 6,
**dadurch gekennzeichnet, daß**
zwei bipolar wirkende Impulsdraht-Bewegungssensoren (70, 71) und mindestens ein mit der Drehwelle (2) verbundener Dauermagnet (72) vorgesehen ist.

**9.** Drehwinkelsensor nach einem der Ansprüche 1 bis 6,
**dadurch gekennzeichnet, daß**
drei unipolar wirkende Impulsdraht-Bewegungssensoren (80', 81, 82) sechs feststehende Dauermagnete und zwei mit der Drehwelle (2) verbundene ferromagnetische Flußleitstücke (87, 88) vorgesehen sind.

**10.** Drehwinkelsensor nach einem der Ansprüche 1 bis 6,
**dadurch gekennzeichnet, daß**
drei bipolar wirkende Impulsdraht-Bewegungssensoren (73, 74, 75) sechs feststehende Dauermagnete und ein mit der Drehwelle (2) verbundenes ferromagnetisches Flußstück (80) vorgesehen sind.

**11.** Drehweinkelsensor nach einem der Ansprüche 1 bis 6,
**dadurch gekennzeichnet, daß**
ein mit der Drehwelle (2) verbundener Impulsdrahtabschnitt, zwei feststehend angeordnete Sensorspulen (90, 91) und vier feststehend angeordnete Dauermagnete (92, 93, 94, 95) vorgesehen sind.

**12.** Drehwinkelsensor nach Anspruch 2,
**dadurch gekennzeichnet, daß**
die elektronische Zählschaltung (13) besteht aus

- dem nicht-flüchtigen Schreib-/Lesespeicher (21),
- den den Bewegungssensoren zugeordneten Impulsformungsschaltungen,
- einem mit dem Schreib-/Lesepsiecher über Datenleitungen DO; D1, ... Dnn (46, 47, 48, .. 49) verbundenen Auf-/Abwärtszähler (22),
- einer Steuerschaltung (19), der die Spannungsimpulse der Bewegungssensoren über die Impulsformungsschaltung als Impulsspannungsvektor Y = [Y1, Y2, Y3] (28, 29, 39) zugeführt werden, und die mit dem Schreib-/Lesespeicher über Logiksignale "Aus nicht-flüchtigem Speicher lesen" (38), "In nicht-flüchtigen Speicher schreiben" (37), "Zählrichtung" (42), "Letzter Umdrehungszustand" Z = [Z1, Z2, Z3] (43, 44, 45) und mit dem Auf-/Abwärtszähler über Logiksignale "Takt" (39, "Auf/Ab" (40) und "Zähler setzen" (41) verbunden ist, und die an die Impulsformungsschaltungen (16, 17, 18) die Logiksignale "Entladen" (31, 32, 33) ausgibt,
- einer Auswerte- und Schnittstellen- Schaltungsanordnung (20), die ein Logiksignal "Ausgabe bereit" (36) von der Steuerschaltungsanordnung (19) empfängt und die mit dem nicht-flüchtigen Speicher über Logiksignale "Zählrichtung-Ausgabe" (50), über den Zustandsvektor "Letzter Umdrehungszustand-Ausgabe" Z' = [Z1', Z2', Z3'], bestehend aus den Logiksignalen Z1', Z2', Z3' (51, 52, 53), und über ein Datenwort "Umdrehungen-Ausgabe", bestehend aus den Datenbit DO', D1', ... Dn' (54, 55, 56, .. 57), verbunden ist.

**Claims**

**1.** Angle of rotation sensor (1) to measure the angular position of a rotary shaft (2) during more than one revolution, consisting of a fine angle of rotation sensor (3) connected with rotary shaft (2) for absolute measurement of the angular position of rotary shaft (2) during one revolution and of a count arrangement (4) to count complete revolutions of rotary shaft (2) whereby count arrangement (4) consists of at least two pulse wire movement sensors (70, 71) offset stationary on a rotor, at least one permanent magnet (72) and one electronic circuit (13),
**characterised in that** a non-volatile read/write memory (21) to record the number of shaft revolutions is provided and part of the electrical energy produced by pulse wire movement sensors (70, 71) is fed to electronic count circuit (13) for the purpose of energy supply.

2. Angle of rotation sensor in accordance with Claim 1,
**characterised in that**
a pulse forming circuit (16), consisting of a charging element (24), to which the voltage pulses of the movement sensor are fed via control element (23) and a further control element (27) through which the voltage of the charging capacitor is fed to a temporary supply voltage (34), is assigned to each pulse wire movement sensor.

3. Angle of rotation sensor in accordance with Claim 2,
**characterised in that**
control elements (23, 27) are designed as semi-conductor diodes and charging element (24) as capacitor.

4. Angle of rotation sensor in accordance with Claims 2 or 3,
**characterised in that**
pulse forming circuit (16) has a serial circuit consisting of a discharge resistor (25) and an electronic control (26) to which the voltage of the charging capacitor (24) is fed.

5. Angle of rotation sensor in accordance with one of Claims 1 to 4,
**characterised in that**
the memory elements of non-volatile read/write memory (21) are designed using ferro electric technology as crystal dipole the control state of which is changed by applying an electric field.

6. Angle of rotation sensor in accordance with Claim 1,
**characterised in that**
non-volatile read/write memory (21) is designed as static semi-conductor memory which is fed by voltage from a battery.

7. Angle of rotation sensor in accordance with one of Claims 1 to 6,
**characterised in that**
three unipolar-acting pulse wire movement sensors (6, 7, 8, 73, 74, 75, 80', 81, 82), one control permanent magnet (10, 77, 83) connected with rotary shaft (2) and two re-set permanent magnets (11, 12, 76, 78, 84, 85) connected with the rotary shaft are provided.

8. Angle of rotation sensor in accordance with one of Claims 1 to 6,
**characterised in that**
two bipolar-acting pulse wire movement sensors (70, 71) and at least one permanent magnet (72) connected with rotary shaft (2) are provided.

9. Angle of rotation sensor in accordance with one of Claims 1 to 6,
**characterised in that**
three unipolar-acting pulse wire movement sensors (80', 81, 82), six stationary permanent magnets and two ferro-magnetic flux transducers (87, 88) connected with rotary shaft (2) are provided.

10. Angle of rotation sensor in accordance with one of Claims 1 to 6,
**characterised in that**
three bipolar-acting pulse wire movement sensors (73, 74, 75), six stationary permanent magnets and one ferro-magnetic flux transducer (80) connected with rotary shaft (2) are provided.

11. Angle of rotation sensor in accordance with one of Claims 1 to 6,
**characterised in that**
one pulse wire section connected with rotary shaft (2), two sensor coils mounted stationary (90, 91) and four stationary permanent magnets (92, 93, 94, 95) are provided.

12. Angle of rotation sensor in accordance with Claim 2,
**characterised in that**

electronic count circuit (13) consists of:

- non-volatile read/write memory (21)
- the pulse forming circuits assigned to the movement sensors
- an up/down counter (22) connected with the read/write memory via data wires D0; D1, ... Dnn (46, 47, 48, .. 49)
- a control circuit (19) to which the voltage pulses of the movement sensors are fed via the pulse forming circuit as pulse voltage vector Y = [Y1, Y2, Y3] (28, 29, 39) and which is connected with the read/write memory via logic signals "Read from non-volatile memory" (38), "Write in non-volatile memory" (37), "Count direction" (42), "Last revolution state" Z =[Z1, Z2, Z3] (43, 44, 45) and with the up/down counter via logic signals "Cycle" (39), "Up/down" (40) and "Set counter" (41) and which transmits the logic signals "Discharge" (31, 32, 33) to the pulse forming circuits (16, 17, 18)
- an evaluation and interface circuit arrangement (20) which receives a logic signal "Output ready" (36) from control circuit arrangement (19) and which is connected with the non-volatile memory via logic signals "Count direction output" (50), via the state vector "Last revolution state output" Z' = [Z1', Z2', Z3'], consisting of the logic signals Z1', Z2', Z3' (51, 52, 53) and a data element "Revolution output", consisting of the data bit D0', D1',....Dn' (54, 55, 56, 57).

## Revendications

1. Capteur d'angle de rotation (1) pour la mesure de la position angulaire d'un arbre rotatif (2) sur plus d'une rotation, constitué par un capteur d'angle de rotation précis (3) relié à l'arbre rotatif (2) et servant à réaliser la mesure absolue de la position angulaire de l'arbre rotatif (2) sur une rotation, et par un dispositif de comptage (4) servant à compter les rotations complètes de l'arbre rotatif (2), le dispositif de comptage (4) étant constitué par au moins deux capteurs de déplacement à fil à impulsions (70, 71) montés de façon fixe sur une circonférence de cercle, au moins un aimant permanent (72) et un circuit de montage électronique (13),
caractérisé en ce que
une mémoire d'écriture/lecture non volatile (21) est prévue pour la mémorisation du nombre des rotations de l'arbre, et une partie de l'énergie électrique, qui est délivrée par les capteurs de déplacement à fil à impulsions (70, 71) est envoyée au circuit de comptage électronique (13) pour l'alimentation en énergie.

2. Capteur d'angle de rotation selon la revendication 1,
caractérisé en ce que
à chaque capteur de déplacement à fil à impulsions est associé un circuit (16) de mise en forme d'impulsions constitué par un élément de chargement (24), auquel les impulsions de tension du capteur de déplacement sont envoyées par l'intermédiaire d'un élément de commutation (23), et un autre élément de commutation (27), au moyen duquel la tension de l'élément de chargement est envoyée à une unité (34) délivrant une tension d'alimentation auxiliaire.

3. Capteur d'angle de rotation selon la revendication 2,
caractérisé en ce que
les éléments de commutation (23, 27) sont réalisés sous la forme de diodes à semi-conducteurs et l'élément de chargement (24) est réalisé sous la forme d'un condensateur.

4. Capteur d'angle de rotation selon la revendication 2 ou 3,
caractérisé en ce que
le circuit (16) de mise en forme d'impulsions comporte un circuit série, qui est constitué par une résistance de décharge (25) et un interrupteur électronique (26) et auquel est envoyée la tension de l'élément de chargement (24).

5. Capteur d'angle de rotation selon l'une des revendications 1 à4
caractérisé en ce que
les éléments de la mémoire d'écriture/lecture non volatile (21) sont réalisés selon la technologie ferroélectrique sous la forme de dipôles cristallins, dont l'état de commutation est modifié par application d'un champ électrique.

6. Capteur d'angle de rotation selon la revendication 1
caractérisé en ce que
la mémoire d'écriture/lecture non volatile (21) est agencée sous la forme d'une mémoire à semi-conducteurs statique à laquelle une tension d'alimentation est envoyée à partir d'un accumulateur d'énergie.

7. Capteur d'angle de rotation selon l'une des revendications 1 à 6,
caractérisé en ce que
trois capteurs de déplacement à fil à impulsions (6, 7, 8, 73, 74, 75, 80', 81, 82) à action unipolaire, un aimant permanent de commutation (10, 77, 83) relié à l'arbre rotatif (2) et deux aimants permanents de rappel (11, 12, 76, 78, 84, 85) reliés à l'arbre de rotation sont prévus.

8. Capteur d'angle de rotation selon l'une des revendications 1 à 6,
caractérisé en ce que
deux capteurs de déplacement à fil à impulsions (70, 71) à action bipolaire et au moins un aimant permanent (72) relié à l'arbre rotatif (2) sont prévus.

9. Capteur d'angle de rotation selon l'une des revendications 1 à 6,
caractérisé en ce que
trois capteurs de déplacement à fil à impulsions (80', 81, 82) à action unipolaire, six aimants permanents fixes et deux pièces ferromagnétiques de guidage de flux (87, 88) reliées à l'arbre rotatif (2) sont prévus.

10. Capteur d'angle de rotation selon l'une des revendications 1 à 6
caractérisé en ce que
trois capteurs de déplacement à fil à impulsions (73, 74, 75) à action bipolaire, six aimants permanents fixes et une pièce ferromagnétique de guidage de flux (80), qui est reliée à l'arbre rotatif (2), sont prévus.

11. Capteur d'angle de rotation selon l'une des revendications 1 à 6,
caractérisé en ce que
une section de fil à impulsions relié à l'arbre rotatif (2), deux bobines de capteur (90, 91) montées fixes et quatre aimants permanents (92, 93, 94, 95) montés fixes sont prévus.

12. Capteur d'angle de rotation selon la revendication 2,
caractérisé en ce que
le circuit de comptage électronique (13) est constitué par

- la mémoire d'écriture/lecture non volatile (21),
- les circuits de mise en forme d'impulsions associés aux capteurs de déplacement,
- un compteur progressif/régressif (22), qui est relié à la mémoire d'écriture/lecture par l'intermédiaire de lignes de transmission de données D0; D1, ... Dnn (46, 47, 48,... 49),
- un circuit de commande (19), auquel les impulsions de tension des capteurs de déplacement sont envoyées par l'intermédiaire du circuit de mise en forme d'impulsions en tant que vecteur de tension d'impulsions Y = [Y1, Y2, Y3] (28, 29, 39), et qui est relié à la mémoire d'écriture/lecture par l'intermédiaire de signaux logiques "lecture à partir de la mémoire non volatile" (38), "inscription dans la mémoire non volatile" (37), "dispositif de comptage" (42), "dernier état de rotation", Z = [Z1, Z2, Z3] (43, 44, 45), et est relié au compteur progressif/régressif par l'intermédiaire de signaux logiques "cadence" (39), "comptage progressif/régressif" (40) et "positionnement du compteur" (41), et qui délivre les signaux logiques "déchargement" (31, 32, 33) aux circuits de mise en forme d'impulsions (16, 17, 18),
- un montage d'exploitation et d'interface (20), qui reçoit un signal logique "sortie prête" (36) de la part du montage de commande (19) et qui est relié à la mémoire non volatile par l'intermédiaire de signaux logiques "sortie du sens de comptage" (50), par l'intermédiaire du vecteur d'état "dernière sortie d'état de rotation" Z' = [Z'1, Z'2, Z'3], constitué par les signaux logiques Z1', Z2', 23' (51, 52, 53), et par l'intermédiaire d'un mot de données "sortie de rotation", constitué par les bits de données D0', D1', ... Dn' (54, 55, 56, ... 57).

Fig. 1

EP 0 724 712 B1

Fig. 2

Fig. 3

Fig. 4

Fig. 6

Fig. 5

18

Fig. 8

Fig. 7

Fig. 9

Fig. 10

EP 0 724 712 B1

Fig. 11

EP 0 724 712 B1